# EUROPEAN PATENT APPLICATION

(11) **EP 3 110 059 A1**
(43) Date of publication of application: **28.12.2016**
(21) Application number: 14886329.3
(22) Date of filing: 19.03.2014
(51) Int. Cl.: H04L 1/18

(54) **DATA TRANSMISSION AND FEEDBACK PROCESSING METHOD AND APPARATUS**

(71) Applicant: Huawei Technologies Co., Ltd, Shenzhen, Guangdong 518129 (CN)
(72) Inventor: HU, Zhenxing, Shenzhen Guangdong 518129 (CN); LI, Bingzhao, Shenzhen Guangdong 518129 (CN); QUAN, Wei, Shenzhen Guangdong 518129 (CN); YANG, Xiaodong, Shenzhen Guangdong 518129 (CN); ZHANG, Jian, Shenzhen Guangdong 518129 (CN)
(74) Representative: Pfenning, Meinig & Partner mbB
(86) International application number: PCT/CN2014/073701
(87) International publication number: WO 2015/139235

(57) **Abstract**

Embodiments of the present invention provide a data transmission and feedback processing method and apparatus. The data transmission and feedback processing apparatus of the present invention includes: a first receiving module, configured to receive a data packet sent by a second device, where the data packet carries a sequence number SN; an identification module, configured to identify an exception by the first device according to scheduling information corresponding to the received data packet and the SN carried in the data packet; and a feedback module, configured to determine the exception by the first device and send a feedback message to the second device, where the feedback message carries an SN, so that the second device retransmits a data packet to the first device according to the SN. The embodiments of the present invention resolve a problem that present uniform HARQ retransmission times cannot meet QoS requirements of different services, so that HARQ retransmission requirements for QoS of different services are met.

## Description

### TECHNICAL FIELD

Embodiments of the present invention relate to wireless communications technologies, and in particular, to a data transmission and feedback processing method and apparatus.

### BACKGROUND

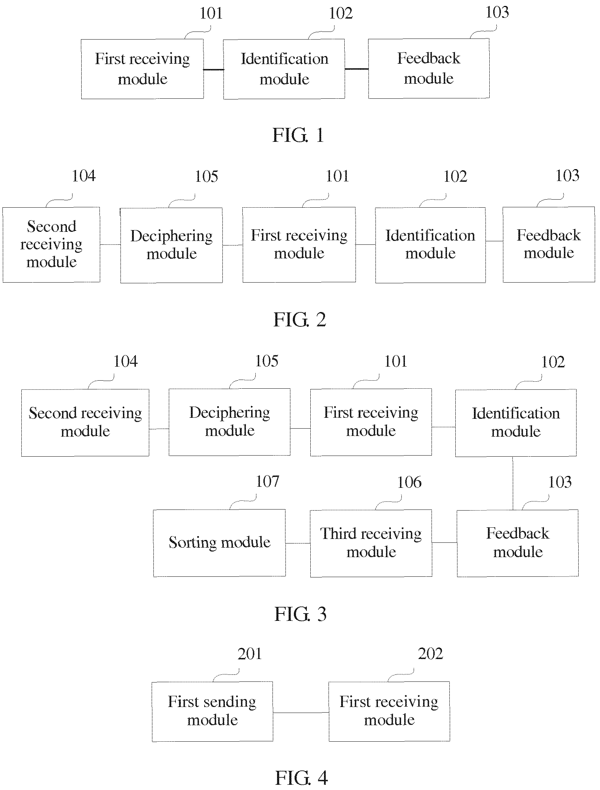

FIG. 1 shows a Long Term Evolution (English: Long Term Evolution, hereinafter referred to as LTE) radio access network (English: Radio Access Network, hereinafter referred to as RAN) user plane (English: User Plane, hereinafter referred to as UP) protocol stack, where a Packet Data Convergence Protocol (English: Packet Data Convergence Protocol, hereinafter referred to as PDCP) layer is mainly responsible for functions such as header compression, encryption/decryption, integrity protection, sequence number (English: Sequence Number, hereinafter referred to as SN) maintenance, and in-sequence delivery; a Radio Link Control (English: Radio Link Control, hereinafter referred to as RLC) layer is mainly responsible for functions such as data error detection (by means of an automatic repeat request (Automatic Repeat reQuest, hereinafter referred to as ARQ) mechanism), re-sorting, data concatenation, segmentation, and re-segmentation, and duplicate detection; a Medium Access Control (English: Medium Access Control, hereinafter referred to as MAC) layer is mainly responsible for functions such as mapping from a logical channel to a transmission channel, a logical channel prioritization (English: Logical Channel Prioritization, hereinafter referred to as LCP) process, error detection by means of a hybrid automatic repeat request (English: Hybrid Automatic Repeat reQuest, hereinafter referred to as HARQ) mechanism, and scheduling information reporting.

It may be learnt that in an existing architecture, the MAC layer and the RLC layer each include an error detection process, and a difference is that the MAC layer uses the HARQ protocol, while the RLC layer uses the ARQ protocol. For a data packet that enters an LTE RAN, a PDCP SN of 7 or 12 bits is first added at the PDCP layer; after entering the RLC layer, a PDCP PDU undergoes concatenation or segmentation. For an unacknowledged mode (English: Unacknowledged Mode, hereinafter referred to as UM), an RLC SN of 5 or 12 bits is further added to each RLC PDU, and for an acknowledged mode (English: Acknowledged Mode, hereinafter referred to as AM), an RLC SN of 12 bits is further added to each RLC PDU.

However, because different services have different requirements for quality of service (English: Quality of Service, hereinafter referred to as QoS) of reliable transmission, present uniform HARQ retransmission times cannot meet the QoS requirements of the different services.

### SUMMARY

Embodiments of the present invention provide a data transmission and feedback processing method and apparatus, so as to resolve a problem that present uniform HARQ retransmission times cannot meet QoS requirements of different services, so that HARQ retransmission requirements for QoS of different services are met.

A first aspect of the embodiments of the present invention provides a data transmission and feedback processing apparatus, including:
a first receiving module, configured to receive a data packet sent by a second device, where the data packet carries a first sequence number SN;
an identification module, configured to identify an exception according to scheduling information corresponding to the received data packet and the first SN carried in the data packet; and
a feedback module, configured to determine the exception and send a feedback message to the second device, where the feedback message carries a second SN, so that the second device retransmits a data packet to the first device according to the second SN, and the second SN is an SN corresponding to the data packet that is corresponding to the exception.

In a first possible implementation manner of the first aspect, the apparatus further includes:
a second receiving module, configured to: before the first receiving module receives the data packet sent by the second device, receive the data packet sent by the second device, where the data packet carries the first SN; and
a decoding module, configured to decode the data packet and send a feedback identifier to the second device, where the feedback identifier includes a correctness identifier Ack and an error identifier Nack, so that the second device retransmits a data packet corresponding to the Nack in a hybrid automatic repeat HARQ process.

With reference to the first aspect or the first possible implementation manner of the first aspect, in a second possible implementation manner of the first aspect, the identification module is specifically configured to:
determine, according to the scheduling information corresponding to the received data packet, that the data packet is a newly transmitted data packet, and that in a buffer of a process corresponding to the data packet, there is a data packet that is not correctly decoded;
or
start a first time window when there is a data packet that is not correctly decoded in a buffer of a first process, and determine, in the first time window and according to the scheduling information corresponding to the received data packet, retransmission of the data packet that is not received and not correctly decoded in the first process;
or
start a second time window when there is a data packet that is not correctly decoded in a buffer corresponding to a second process, and determine, outside the second time window and according to scheduling information corresponding to a first received data packet, that a process of the first data packet is inconsistent with a process of the data packet that is not correctly decoded.

With reference to the second possible implementation manner of the first aspect, in a third possible implementation manner of the first aspect, the feedback module is specifically configured to:
determine that the exception is that the second device identifies the error identifier Nack as the correctness identifier Ack, and send a feedback message to the second device, where the feedback message carries an SN of a data packet corresponding to the Nack data packet.

With reference to the first aspect or the first possible implementation manner of the first aspect, in a fourth possible implementation manner of the first aspect, the identification module is specifically configured to:
determine, according to the first SN carried in the received data packet that is sent by the second device, that the data packet is an inconsecutive data packet;
or
determine, in a receive window and according to the first SN carried in the received data packet that is sent by the second device, that the data packet is an inconsecutive data packet.

With reference to the fourth possible implementation manner of the first aspect, in a fifth possible implementation manner of the first aspect, the feedback module is specifically configured to:
determine that the exception is that the first device does not receive a data packet sent by the second device, and send a feedback message to the second device, where the feedback message carries an SN corresponding to the data packet not received or an SN corresponding to a data packet that is received before or after the data packet not received.

With reference to any one of the first aspect to the fifth possible implementation manner of the first aspect, in a sixth possible implementation manner of the first aspect, the apparatus further includes:
a third receiving module, configured to: after the determining module determines the exception and sends the feedback message to the second device, receive a retransmitted data packet sent by the second device, where the data packet carries a third SN; and
a sorting module, configured to re-sort the data packet according to the third SN carried in the retransmitted data packet.

With reference to any one of the first aspect to the sixth possible implementation manner of the first aspect, in a seventh possible implementation manner of the first aspect, the feedback message is carried in a MAC control message.

With reference to any one of the first aspect to the seventh possible implementation manner of the first aspect, in an eighth possible implementation manner of the first aspect, the first and the third SNs are carried in a PDU at a MAC layer;
or
the first and the third SNs are carried in a PDU scheduling channel PDCCH at a MAC layer.

A second aspect of the embodiments of the present invention provides a data transmission and feedback processing apparatus, including:
a first sending module, configured to send a data packet to a first device, where the data packet carries a first sequence number SN, so that the first device identifies an exception according to the first SN, so that the first device sends a feedback message that carries a second SN to the second device; and
a first receiving module, configured to receive the feedback message sent by the first device, where the feedback message carries the second SN, and the second SN is an SN that is carried in a data packet corresponding to the exception.

In a first possible implementation manner of the second aspect, the apparatus further includes:
a second sending module, configured to: after the first receiving module receives the feedback message sent by the first device, send a retransmitted data packet to the first device according to the second SN carried in the feedback message, where the data packet carries a third SN, so that the first device re-sorts the data packet according to the third SN.

With reference to the second aspect or the first possible implementation manner of the second aspect, in a second possible implementation manner of the second aspect, the apparatus further includes:
a third sending module, configured to send the data packet to the first device before the first sending module sends the data packet to the first device, where the data packet carries the first SN; and
a second receiving module, configured to receive a feedback identifier sent by the second device, where the feedback identifier includes a correctness identifier ACK and an error identifier Nack.

With reference to any one of the second aspect to the second possible implementation manner of the second aspect, in a third possible implementation manner of the second aspect, the feedback message is carried in a MAC control message.

With reference to any one of the second aspect to the third possible implementation manner of the second aspect, in a fourth possible implementation manner of the second aspect, the first and the third SNs are carried in a PDU at a MAC layer;
or
the first and the third SNs are carried in a PDU scheduling channel PDCCH at a MAC layer.

A third aspect of the embodiments of the present invention provides a data transmission and feedback processing method, including:
receiving, by a first device, a data packet sent by a second device, where the data packet carries a first sequence number SN;
identifying, by the first device, an exception according to scheduling information corresponding to the received data packet and the first SN carried in the data packet; and
determining, by the first device, the exception and sending a feedback message to the second device, where the feedback message carries a second SN, so that the second device retransmits a data packet to the first device according to the second SN, and the second SN is an SN corresponding to the data packet that is corresponding to the exception.

In a first possible implementation manner of the third aspect, before the receiving, by a first device, a data packet sent by a second device, the method further includes:
receiving, by the first device, the data packet sent by the second device, where the data packet carries the first SN; and
decoding, by the first device, the data packet and sending a feedback identifier to the second device, where the feedback identifier includes a correctness identifier Ack and an error identifier Nack, so that the second device retransmits the data packet in a hybrid automatic repeat HARQ process.

With reference to the third aspect or the first possible implementation manner of the third aspect, in a second possible implementation manner of the third aspect, the identifying, by the first device, an exception according to scheduling information corresponding to the received data packet and the first SN carried in the data packet includes:
determining, by the first device according to the scheduling information corresponding to the received data packet, that the data packet is a newly transmitted data packet, and that in a buffer of a process corresponding to the data packet, there is a data packet that is not correctly decoded;
or
starting, by the first device, a first time window when there is a data packet that is not correctly decoded in a buffer of a first process, and determining, in the first time window and according to the scheduling information corresponding to the received data packet, retransmission of the data packet that is not received and not correctly decoded in the first process;
or
starting, by the first device, a second time window when there is a data packet that is not correctly decoded in a buffer corresponding to a second process, and determining, outside the second time window and according to scheduling information corresponding to a first received data packet, that a process of the first data packet is inconsistent with a process of the data packet that is not correctly decoded.

With reference to the second possible implementation manner of the third aspect, in the second possible implementation manner of the third aspect, the determining, by the first device, the exception and sending a feedback message to the second device includes:
determining, by the first device, that the exception is that the second device identifies the error identifier Nack as the correctness identifier Ack, and sending a feedback message to the second device, where the feedback message carries an SN of a data packet corresponding to the Nack.

With reference to the third aspect or the first possible implementation manner of the third aspect, in a fourth possible implementation manner of the third aspect, the identifying, by the first device, an exception according to scheduling information corresponding to the received data packet and the first SN carried in the data packet includes:
determining, according to the first SN carried in the received data packet that is sent by the second device, that the data packet is an inconsecutive data packet;
or
determining, in a receive window and according to the first SN carried in the received data packet that is sent by the second device, that the data packet is an inconsecutive data packet.

With reference to the fourth possible implementation manner of the third aspect, in a fifth possible implementation manner of the third aspect, the determining, by the first device, the exception and sending a feedback message to the second device includes:
determining, by the first device, that the exception is that the first device does not receive a data packet sent by the second device, and sending a feedback message to the second device, where the feedback message carries an SN corresponding to the data packet not received or an SN corresponding to a data packet that is received before or after the data packet not received.

With reference to any one of the third aspect to the fifth possible implementation manner of the third aspect, in a sixth possible implementation manner of the third aspect, after the determining, by the first device, the exception and sending a feedback message to the second device, the method further includes:
receiving, by the first device, a retransmitted data packet sent by the second device, where the data packet carries a third SN; and
re-sorting, by the first device, the data packet according to the third SN carried in the retransmitted data packet.

With reference to any one of the third aspect to the sixth possible implementation manner of the third aspect, in a seventh possible implementation manner of the third aspect, the feedback message is carried in a MAC control message.

With reference to any one of the third aspect to the seventh possible implementation manner of the third aspect, in an eighth possible implementation manner of the third aspect, the sequence numbers SNs are carried in a PDU at a MAC layer;
or
the SNs are carried in a PDU scheduling channel PDCCH at a MAC layer.

A fourth aspect of the embodiments of the present invention provides a data transmission and feedback processing method, including:
sending, by a second device, a data packet to a first device, where the data packet carries a first sequence number SN, so that the first device identifies an exception according to the first SN, so that the first device sends a feedback message that carries a second SN to the second device; and
receiving, by the second device, the feedback message sent by the first device, where the feedback message carries the second SN.

In a first possible implementation manner of the fourth aspect, after the receiving, by the second device, the feedback message sent by the first device, the method further includes:
sending, by the second device, a retransmitted data packet to the first device according to the second SN carried in the feedback message, where the data packet carries a third SN, so that the first device re-sorts the data packet according to the third SN.

With reference to the fourth aspect or the first possible implementation manner of the fourth aspect, in a second possible implementation manner of the fourth aspect, before the sending, by a second device, a data packet to a first device, the method further includes:
sending, by the second device, the data packet to the first device, where the data packet carries the first SN; and
receiving, by the second device, a feedback identifier sent by the second device, where the feedback identifier includes a correctness identifier ACK and an error identifier Nack.

With reference to any one of the fourth aspect to the second possible implementation manner of the fourth aspect, in a third possible implementation manner of the fourth aspect, the feedback message is carried in a MAC control message.

With reference to any one of the fourth aspect to the third possible implementation manner of the fourth aspect, in a fourth possible implementation manner of the fourth aspect, the first and the third SNs are carried in a PDU at a MAC layer;
or
the first and the third SNs are carried in a PDU scheduling channel PDCCH at a MAC layer.

According to the data transmission and feedback processing method and apparatus in the embodiments of the present invention, a first device identifies and determines an exception according to scheduling information corresponding to a received data packet and an SN carried in the data packet: a second device identifies an error identifier Nack as a correctness identifier Ack, and a feedback message is sent to the second device, where the feedback message carries a sequence number SN. Therefore, a problem that present uniform HARQ retransmission times cannot meet QoS requirements of different services is resolved, so that HARQ retransmission requirements for QoS of different services are met.

### BRIEF DESCRIPTION OF DRAWINGS

To describe the technical solutions in the embodiments of the present invention or in the prior art more clearly, the following briefly describes the accompanying drawings required for describing the embodiments or the prior art. Apparently, the accompanying drawings in the following description show some embodiments of the present invention, and persons of ordinary skill in the art may still derive other drawings from these accompanying drawings without creative efforts.
FIG. 1 is a schematic structural diagram of Embodiment 1 of a data transmission and feedback processing apparatus according to the present invention;
FIG. 2 is a schematic structural diagram of Embodiment 2 of a data transmission and feedback processing apparatus according to the present invention;
FIG. 3 is a schematic structural diagram of Embodiment 3 of a data transmission and feedback processing apparatus according to the present invention;
FIG. 4 is a schematic structural diagram of Embodiment 4 of a data transmission and feedback processing apparatus according to the present invention;
FIG. 5 is a schematic structural diagram of Embodiment 5 of a data transmission and feedback processing apparatus according to the present invention;
FIG. 6 is a schematic structural diagram of Embodiment 6 of a data transmission and feedback processing apparatus according to the present invention;
FIG. 7 is a flowchart of Embodiment 1 of a data transmission and feedback processing method according to the present invention;
FIG. 8 is a flowchart of Embodiment 2 of a data transmission and feedback processing method according to the present invention;
FIG. 9 is a schematic structural diagram of Embodiment 7 of a data transmission and feedback processing apparatus according to the present invention; and
FIG. 10 is a schematic structural diagram of Embodiment 8 of a data transmission and feedback processing apparatus according to the present invention.

### DESCRIPTION OF EMBODIMENTS

To make the objectives, technical solutions, and advantages of the embodiments of the present invention clearer, the following clearly and completely describes the technical solutions in the embodiments of the present invention with reference to the accompanying drawings in the embodiments of the present invention. Apparently, the described embodiments are some but not all of the embodiments of the present invention. All other embodiments obtained by persons of ordinary skill in the art based on the embodiments of the present invention without creative efforts shall fall within the protection scope of the present invention.

FIG. 1 is a schematic structural diagram of Embodiment 1 of a data transmission and feedback processing apparatus according to the present invention. As shown in FIG. 1, the apparatus in this embodiment may include:
a first receiving module 101, configured to receive a data packet sent by a second device, where the data packet carries a first sequence number SN;
an identification module 102, configured to identify an exception according to scheduling information corresponding to the received data packet and the first SN carried in the data packet; and
a feedback module 103, configured to determine the exception and send a feedback message to the second device, where the feedback message carries a second SN, so that the second device retransmits a data packet to the first device according to the second SN, and the second SN is an SN corresponding to the data packet that is corresponding to the exception.

Specifically, the first receiving module of the first device receives the data packet that carries the first sequence number SN and is sent by the second device. The identification module identifies the exception according to the scheduling information corresponding to the received data packet and the first SN. After determining the exception, the feedback module sends the feedback message to the second device, where the feedback message carries the SN of the data packet that is corresponding to the exception.

The identification module identifies an exception in the following two manners:

Optionally, the identification module is specifically configured to:
determine, according to the scheduling information corresponding to the received data packet, that the data packet is a newly transmitted data packet, and that in a buffer of a process corresponding to the data packet, there is a data packet that is not correctly decoded;
or
start a first time window when there is a data packet that is not correctly decoded in a buffer of a first process, and determine, in the first time window and according to the scheduling information corresponding to the received data packet, retransmission of the data packet that is not received and not correctly decoded in the first process;
or
start a second time window when there is a data packet that is not correctly decoded in a buffer corresponding to a second process, and determine, outside the second time window and according to scheduling information corresponding to a first received data packet, that a process of the first data packet is inconsistent with a process of the data packet that is not correctly decoded.

The feedback module is specifically configured to:
determine that the exception is that the second device identifies an error identifier Nack as a correctness identifier Ack, and send a feedback message to the second device, where the feedback message carries an SN of a data packet corresponding to the Nack.

Optionally, the identification module is specifically configured to:
determine, according to the SN carried in the received data packet that is sent by the second device, that the data packet is an inconsecutive data packet;
or
determine, in a receive window and according to the SN carried in the received data packet that is sent by the second device, that the data packet is an inconsecutive data packet.

The feedback module is specifically configured to:
determine that the exception is that the first device does not receive a data packet sent by the second device, and send a feedback message to the second device, where the feedback message carries an SN corresponding to the data packet not received or an SN corresponding to a data packet that is received before or after the data packet not received.

Specifically, a first exception is: In a process corresponding to a data packet that is not correctly deciphered or decoded, the identification module determines, according to a newly-transmitted identifier in scheduling information corresponding to a received data packet, that the data packet is a newly transmitted data packet in the process corresponding to the data packet that is not correctly decoded, but is not a retransmitted data packet corresponding to the data packet that is not correctly deciphered or decoded; when there is a data packet that is not correctly decoded in a buffer of a first process, the identification module starts a first time window, and in the first time window, the identification module determines, according to a process ID included in scheduling information corresponding to a received data packet, that no retransmitted data packet corresponding to the error identifier Nack exists in the received data packet; or the identification module determines, outside a second time window and according to a process ID included in scheduling information corresponding to a first received data packet, that a process of the received data packet is inconsistent with a process of a data packet that is not correctly decoded, and that the received data packet is not a retransmitted data packet corresponding to the data packet that is not correctly deciphered. According to any one of the foregoing three cases, it may be determined that the exception is that the second device identifies the error identifier Nack as the correctness identifier Ack, and a feedback message is sent to the second device, where the feedback message carries an SN of a data packet corresponding to the Nack.

A second exception is: When not receiving a feedback identifier sent by the first device, the second device may mistakenly consider that the correctness identifier Ack is received, thereby causing loss of the data packet. In this case, a sequence number SN carried in a data packet received by the first device is inconsecutive. For example, an SN of a previous data packet received is 1, and an SN of a next data packet received is 3, which indicates that a data packet of which an SN is 2 is lost. In a receive window, an SN carried in a received data packet is inconsecutive, and data corresponding to the inconsecutive SN is an abnormal data packet. This exception may also be identified by means of an inconsecutive data packet received by the second device in a corresponding HARQ process. For example, an HARQ process ID of transmission of a previous data packet is 1, and an HARQ process ID of a next data packet received is 3, which indicates that an exception occurs in a data packet of which an HARQ process ID is 2. It should be noted that, when an HARQ process ID reaches a maximum value, cyclic sorting needs to be performed. For example, if there are eight HARQ processes, a consecutive HARQ process ID after an HARQ process ID 7 is 0. The first device determines that the exception is that the first device does not receive a data packet sent by the second device, and sends a feedback message to the second device, where the feedback message carries an SN corresponding to the data packet not received or an SN corresponding to a data packet that is received before or after the data packet not received.

Further, the feedback message is carried in a MAC control message.

Further, the first SN or a third SN is carried in a PDU at a MAC layer;
or
the first SN or a third SN is carried in a PDU scheduling channel PDCCH at a MAC layer.

Specifically, the first or the third SN may be carried in a PDU at the MAC layer, or may be carried in a PDU scheduling channel PDCCH at the MAC layer.

In this embodiment, for the last data packet in a transmission process, because no information corresponding to a subsequent data packet may be used to identify the foregoing two exceptions, an exception may be processed in the following two manners: A data packet sent by the second device and received by the first device further carries a Polling indication, and when receiving the data packet, the first device sends a stop message to the second device, where the stop message carries an SN, so that after receiving the stop message, the second devices stops retransmitting the data packet. A second manner is enhancing an HARQ feedback of the first device: performing repeated coding in a subframe, or sending same Nack/Ack in multiple consecutive subframes. Therefore, a probability of exception occurrence is decreased, and reliability is improved.

According to the apparatus in this embodiment, a data packet sent by a second device is received by a first receiving module, where the data carries a first sequence number SN; and an identification module identifies an exception according to the first SN and scheduling information corresponding to the data packet, and sends a feedback message to the second device, where the feedback message carries a second SN, so that the second device retransmits a data packet to the first device according to the second SN. Therefore, a problem that present uniform HARQ retransmission times cannot meet QoS requirements of different services is resolved, so that HARQ retransmission requirements for QoS of different services are met.

FIG. 2 is a schematic structural diagram of Embodiment 2 of a data transmission and feedback processing apparatus according to the present invention. As shown in FIG. 2, based on the apparatus structure shown in FIG. 1, the apparatus in this embodiment may further include:
a second receiving module 104, configured to: before the first receiving module receives the data packet sent by the second device, receive the data packet sent by the second device, where the data packet carries the data packet sequence number first SN; and
a decoding module 105, configured to decode the data packet and send a feedback identifier to the second device, where the feedback identifier includes a correctness identifier Ack and an error identifier Nack, so that the second device retransmits the data packet in a hybrid automatic repeat HARQ process.

Specifically, before the first receiving module receives the data packet sent by the second device, the second receiving module receives the data packet sent by the second device, where the data packet carries the data packet sequence number SN. The deciphering module deciphers the data packet, and if the deciphering module correctly deciphers the data packet, the deciphering module feeds back the correctness identifier Ack to the second device, or if the deciphering module cannot correctly decipher the data packet, the deciphering module feeds back the error identifier Nack to the second device, so that the second device retransmits the data packet that is not correctly deciphered.

According to the apparatus in this embodiment, before a first receiving module receives a data packet sent by a second device, a second receiving module receives the data packet sent by the second device, where the data packet carries a first SN of the data packet; and a deciphering module deciphers the data packet and sends a feedback identifier to the second device: a correctness identifier Ack and an error identifier Nack, so that the second device retransmits the data packet in a hybrid automatic repeat HARQ process. Therefore, a problem that present uniform HARQ retransmission times cannot meet QoS requirements of different services is resolved, so that HARQ retransmission requirements for QoS of different services are met.

FIG. 3 is a schematic structural diagram of Embodiment 3 of a data transmission and feedback processing apparatus according to the present invention. As shown in FIG. 2, based on the apparatus structure shown in FIG. 2, the apparatus in this embodiment may further include:
a third receiving module 106, configured to: after the determining module determines the exception and sends the feedback message to the second device, receive a retransmitted data packet sent by the second device, where the data packet carries a third SN; and
a sorting module 107, configured to re-sort the data packet according to the third SN carried in the retransmitted data packet.

Specifically, after the determining module determines the exception and sends the feedback message to the second device, the third receiving module receives a retransmitted data packet sent by the second device according to an SN carried in the feedback message, and re-sorts the data packet according to an SN carried in the retransmitted data packet.

According to the apparatus in this embodiment, after a determining module sends a feedback message to a second device, a third receiving module receives a retransmitted data packet sent by the second device according to the feedback message, where the data packet carries an SN; and a sorting module re-sorts the received data packet according to the SN. Therefore, a problem that present uniform HARQ retransmission times cannot meet QoS requirements of different services is resolved, so that HARQ retransmission requirements for QoS of different services are met.

FIG. 4 is a schematic structural diagram of Embodiment 4 of a data transmission and feedback processing apparatus according to the present invention. As shown in FIG. 4, the apparatus in this embodiment may include:
a first sending module 201, configured to send a data packet to a first device, where the data packet carries a first sequence number SN, so that the first device identifies an exception according to the first SN, so that the first device sends a feedback message that carries a second SN to the second device; and
a first receiving module 202, configured to receive the feedback message sent by the first device, where the feedback message carries the second SN, and the second SN is an SN that is carried in a data packet corresponding to the exception.

Specifically, the first sending module sends a data packet to the first device, and a sequence number SN is carried, so that the first device identifies an exception according to the SN. The first receiving module receives a feedback message sent by the first device, where the feedback message carries the SN.

Further, the feedback message is carried in a MAC control message.

Further, the SN is carried in a PDU at a MAC layer;
or
the SN is carried in a PDU scheduling channel PDCCH at a MAC layer.

According to the apparatus in this embodiment, a first sending module sends a data packet to a first device, and a sequence number SN is carried, so that the first device identifies an exception according to the SN; and a first receiving module receives a feedback message sent by the first device, where the feedback message carries the SN. Therefore, a problem that present uniform HARQ retransmission times cannot meet QoS requirements of different services is resolved, so that HARQ retransmission requirements for QoS of different services are met.

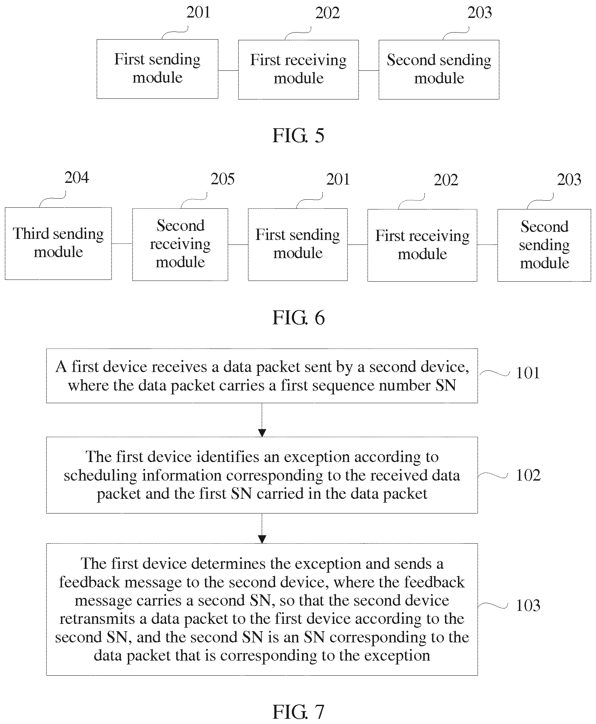

FIG. 5 is a schematic structural diagram of Embodiment 5 of a data transmission and feedback processing apparatus according to the present invention. As shown in FIG. 5, based on the apparatus structure shown in FIG. 4, the apparatus in this embodiment may further include:
a second sending module 203, configured to: after the receiving module receives the feedback message sent by the first device, send a retransmitted data packet to the first device according to the second SN carried in the feedback message, where the data packet carries a third SN, so that the first device re-sorts the data packet according to the third SN.

Specifically, the second sending module sends the retransmitted data packet to the first device according to the second SN carried in the feedback message, and the third SN is carried, so that the first device re-sorts the received data packet according to the third SN. A value of an SN in this embodiment may also be an initial transmission time of a frame number and a subframe number that are first received by a corresponding PDU at the MAC layer or a value for an initial transmission time modulo a send window, and is used by the first device to re-sort the data packet.

According to the apparatus in this embodiment, a second sending module sends a retransmitted data packet to a first device according to a second SN carried in a feedback message of the first device, where the retransmitted data packet carries a third SN. An SN in this embodiment may also be an initial transmission time of a frame number and a subframe number that are first received by a corresponding PDU at a MAC layer or a value for an initial transmission time modulo a send window. Therefore, re-sorting of the data packet received by the first device is implemented.

FIG. 6 is a schematic structural diagram of Embodiment 6 of a data transmission and feedback processing apparatus according to the present invention. As shown in FIG. 6, based on the apparatus structure shown in FIG. 5, the apparatus in this embodiment may further include:
a third sending module 204, configured to send the data packet to the first device before the first sending module sends the data packet to the first device, where the data packet carries the first SN; and
a second receiving module 205, configured to receive a feedback identifier sent by the second device, where the feedback identifier includes a correctness identifier ACK and an error identifier Nack.

Specifically, the second sending module sends the data packet to the first device before the first sending module sends the data packet to the first device, where the data packet carries the first SN. In a data packet transmission process, for the last data packet, a Polling indication is further carried and is used to indicate that the data packet is the last data packet.

According to the apparatus in this embodiment, a third sending module sends a data packet to a first device before a first sending module sends the data packet to the first device, where the data packet carries a first SN, and a feedback identifier sent by a second device is received by a second receiving module, so that the second device retransmits a data packet to the first device according to an SN corresponding to the received feedback identifier.

FIG. 7 is a flowchart of Embodiment 1 of a data transmission and feedback processing method according to the present invention. As shown in FIG. 7, the method in this embodiment may include:

Step 101: A first device receives a data packet sent by a second device, where the data packet carries a first sequence number SN.

Step 102: The first device identifies an exception according to scheduling information corresponding to the received data packet and the first SN carried in the data packet.

Step 103: The first device determines the exception and sends a feedback message to the second device, where the feedback message carries a second SN, so that the second device retransmits a data packet to the first device according to the second SN, and the second SN is an SN carried in the data packet that is corresponding to the exception.

Further, before the first device receives the data packet sent by the second device, the method further includes:
receiving, by the first device, the data packet sent by the second device, where the data packet carries the first SN; and
decoding, by the first device, the data packet and sending a feedback identifier to the second device, where the feedback identifier includes a correctness identifier Ack and an error identifier Nack, so that the second device retransmits the data packet in a hybrid automatic repeat HARQ process.

Optionally, that the first device identifies an exception according to scheduling information corresponding to the received data packet and the first SN carried in the data packet includes:
determining, by the first device according to the scheduling information corresponding to the received data packet, that the data packet is a newly transmitted data packet, and that in a buffer of a process corresponding to the data packet, there is a data packet that is not correctly decoded;
or
starting, by the first device, a first time window when there is a data packet that is not correctly decoded in a buffer of a first process, and determining, in the first time window and according to the scheduling information corresponding to the received data packet, retransmission of the data packet that is not received and not correctly decoded in the first process;
or
starting a second time window when there is a data packet that is not correctly decoded in a buffer corresponding to a second process, and determining, outside the second time window and according to scheduling information corresponding to a received data packet, that a process of the first data packet is inconsistent with a process of the data packet that is not correctly decoded.

That the first device determines the exception and sends a feedback message to the second device includes:
determining, by the first device, that the exception is that the second device identifies the error identifier Nack as the correctness identifier Ack, and sending a feedback message to the second device, where the feedback message carries an SN corresponding to a Nack data packet.

Optionally, that the first device identifies an exception according to the received data packet includes:
determining, according to the first SN carried in the received data packet that is sent by the second device, that the data packet is an inconsecutive data packet;
or
determining, in a receive window and according to the first SN carried in the received data packet that is sent by the second device, that the data packet is an inconsecutive data packet.

That the first device determines the exception and sends a feedback message to the second device includes:
determining, by the first device, that the exception is that the first device does not receive a data packet sent by the second device, and sending a feedback message to the second device, where the feedback message carries an SN corresponding to the data packet not received or an SN corresponding to a data packet that is received before or after the data packet not received.

Further, after the first device determines the exception and sends the feedback message to the second device, the method further includes:
receiving, by the first device, a retransmitted data packet sent by the second device, where the data packet carries a third SN; and
re-sorting, by the first device, the data packet according to the third SN carried in the retransmitted data packet.

Further, the feedback message is carried in a MAC control message.

Further, the first and the third SNs are carried in a PDU at a MAC layer;
or
the first and the third SNs are carried in a PDU scheduling channel PDCCH at a MAC layer.

The method in this embodiment may be executed by the apparatus that is provided in apparatus embodiment 1 of the present invention and shown in FIG. 1, and implementation principles and technical effects of the method are similar and are not described herein.

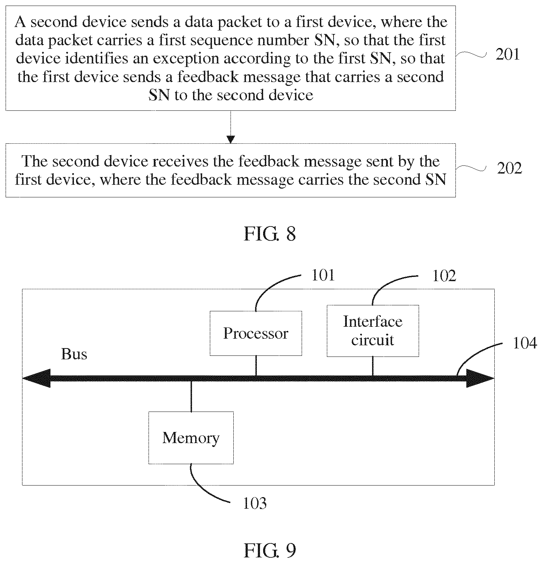

FIG. 8 is a flowchart of Embodiment 2 of a data transmission and feedback processing method according to the present invention. As shown in FIG. 8, the method in this embodiment may include:
Step 201: A second device sends a data packet to a first device, where the data packet carries a first sequence number SN, so that the first device identifies an exception according to the first SN, so that the first device sends a feedback message that carries a second SN to the second device.
Step 202: The second device receives the feedback message sent by the first device, where the feedback message carries the second SN.

Further, after the second device receives the feedback message sent by the first device, the method further includes:
sending, by the second device, a retransmitted data packet to the first device according to the second SN carried in the feedback message, where the data packet carries a third SN, so that the first device re-sorts the data packet according to the third SN.

Further, before the second device sends the data packet to the first device, the method further includes:
sending, by the second device, the data packet to the first device, where the data packet carries the first SN; and
receiving, by the second device, a feedback identifier sent by the second device, where the feedback identifier includes a correctness identifier ACK and an error identifier Nack.

Further, the feedback message is carried in a MAC control message.

Further, the first and the third SNs are carried in a PDU at a MAC layer;
or
the first and the third SNs are carried in a PDU scheduling channel PDCCH at a MAC layer.

The method in this embodiment may be executed by the apparatus that is provided in apparatus embodiment 1 of the present invention and shown in FIG. 4, and implementation principles and technical effects of the method are similar and are not described herein.

FIG. 9 is a schematic structural diagram of Embodiment 7 of a data transmission and feedback processing apparatus according to the present invention. As shown in FIG. 9, the network device in this embodiment includes: a processor 101 and an interface circuit 102. FIG. 9 further shows a memory 103 and a bus 104, where the processor 101, the interface circuit 102, and the memory 103 are connected and communicate with each other by using the bus 104.

The bus 104 may be an Industry Standard Architecture (English: Industry Standard Architecture, ISA for short) bus, a Peripheral Component Interconnect (English: Peripheral Component Interconnect, PCI for short) bus, an inter-integrated circuit (English: Inter-Integrated Circuit, I2C for short) bus, or the like. The bus 104 may be categorized into an address bus, a data bus, a control bus, and the like. For ease of denotation, the bus is represented by using only one thick line in FIG. 9; however, it does not indicate that there is only one bus or only one type of bus.

The memory 103 is configured to store executable program code, where the program code includes a computer operation instruction. The memory 103 may be a volatile memory (English: volatile memory), such as a random access memory (English: random-access memory, RAM for short), or may be a non-volatile memory (English: non-volatile memory, NVM for short), such as a read-only memory (English: read-only memory, ROM for short), a flash memory (English: flash memory), a hard disk drive (English: hard disk drive, HDD for short), or a solid state disk (English: solid-state drive, SSD for short).

The processor 101 may be a central processing unit (English: central processing unit, CPU for short).

The processor 101 may invoke the operation instruction or program code stored in the memory 103 to execute a virtual local area network interface processing method provided in an embodiment of the present invention, where the method includes:
receiving, by the processor 101 by using the interface circuit 102, a data packet sent by a second device, where the data packet carries a first sequence number SN;
identifying, by the processor 101, an exception according to scheduling information corresponding to the received data packet and the first SN carried in the data packet; and
determining, by the processor 101, the exception and sending a feedback message to the second device by using the interface circuit 102, where the feedback message carries a second SN, so that the second device retransmits a data packet to the first device according to the second SN.

The processor 101 receives, by using the interface circuit 102, the data packet sent by the second device, where the data packet carries the data packet sequence number SN; and
the processor 101 deciphers the data packet and sends a feedback identifier to the second device by using the interface circuit 102, where the feedback identifier includes a correctness identifier Ack and an error identifier Nack, so that the second device retransmits the data packet in a hybrid automatic repeat HARQ process.

The processor 101 determines, according to the scheduling information corresponding to the received data packet, that the data packet is a newly transmitted data packet, and that in a buffer of a process corresponding to the data packet, there is a data packet that is not correctly decoded;
or
starts a first time window when there is a data packet that is not correctly decoded in a buffer of a first process, and determines, in the first time window and according to the scheduling information corresponding to the received data packet, retransmission of the data packet that is not received and not correctly decoded in the first process;
or
starts a second time window when there is a data packet that is not correctly decoded in a buffer corresponding to a second process, and determines, outside the second time window and according to scheduling information corresponding to a first received data packet, that a process of the first data packet is inconsistent with a process of the data packet that is not correctly decoded.

The processor 101 determines that the exception is that the second device identifies the error identifier Nack as the correctness identifier Ack, and sends a feedback message to the second device, where the feedback message carries an SN corresponding to a Nack data packet.

The processor 101 determines, according to the first SN carried in the data packet that is sent by the second device and received by using the interface circuit 102, that the data packet is an inconsecutive data packet;
or
determines, in a receive window and according to the SN carried in the received data packet that is sent by the second device, that the data packet is an inconsecutive data packet.

The processor 101 determines that the exception is that the first device does not receive a data packet sent by the second device, and sends a feedback message to the second device, where the feedback message carries an SN corresponding to the data packet not received or an SN corresponding to a data packet that is received before or after the data packet not received.

The processor 101 receives, by using the interface circuit 102, a retransmitted data packet sent by the second device, where the data packet carries an SN; and
the processor 101 re-sorts the data packet according to the third SN carried in the retransmitted data packet.

The processor 101 adds the first and the third SNs into a PDU at a MAC layer;
or
the first and the third SNs are carried in a PDU scheduling channel PDCCH at a MAC layer.

The apparatus in this embodiment may be used to execute the technical solution in the method embodiment shown in FIG. 7, and implementation principles and technical effects of the apparatus are similar and are not described herein.

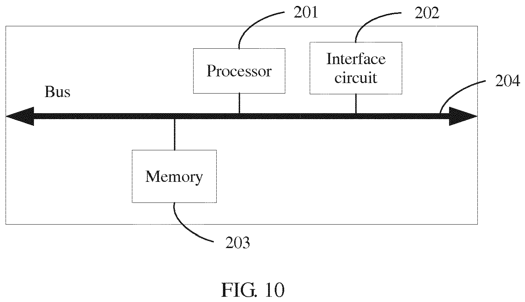

FIG. 10 is a schematic structural diagram of Embodiment 8 of a data transmission and feedback processing apparatus according to the present invention. As shown in FIG. 10, the network device in this embodiment includes: a processor 201 and an interface circuit 202. FIG. 10 further shows a memory 203 and a bus 204, where the processor 201, the interface circuit 202, and the memory 203 are connected and communicate with each other by using the bus 204.

The bus 204 may be an Industry Standard Architecture (English: Industry Standard Architecture, ISA for short) bus, a Peripheral Component Interconnect (English: Peripheral Component Interconnect, PCI for short) bus, an inter-integrated circuit (English: Inter-Integrated Circuit, I2C for short) bus, or the like. The bus 204 may be categorized into an address bus, a data bus, a control bus, and the like. For ease of denotation, the bus is represented by using only one thick line in FIG. 10; however, it does not indicate that there is only one bus or only one type of bus.

The memory 203 is configured to store executable program code, where the program code includes a computer operation instruction. The memory 203 may be a volatile memory (English: volatile memory), such as a random access memory (English: random-access memory, RAM for short), or may be a non-volatile memory (English: non-volatile memory, NVM for short), such as a read-only memory (English: read-only memory, ROM for short), a flash memory (English: flash memory), a hard disk drive (English: hard disk drive, HDD for short), or a solid state disk (English: solid-state drive, SSD for short).

The processor 201 may be a central processing unit (English: central processing unit, CPU for short).

The processor 201 may invoke the operation instruction or program code stored in the memory 203 to execute a virtual local area network interface processing method provided in an embodiment of the present invention, where the method includes:
sending, by the processor 201, a data packet to a first device by using the interface circuit 202, where the data packet carries a first sequence number SN, so that the first device identifies an exception according to the first SN, so that the first device sends a feedback message that carries a second SN to the second device; and
receiving, by the processor 201 by using the interface circuit 202, the feedback message sent by the first device, where the feedback message carries the second SN.

The processor 201 sends a retransmitted data packet to the first device according to the SN carried in the feedback message, where the data packet carries a third SN, so that the first device re-sorts the data packet according to the third SN.

The processor 201 sends the data packet to the first device by using the interface circuit 202, where the data packet carries the sequence number SN.

The processor 201 receives, by using the interface circuit 202, a feedback identifier sent by the second device, where the feedback identifier includes a correctness identifier ACK and an error identifier Nack.

The processor 201 adds the first and the third SNs into a PDU at a MAC layer;
or
the first and the third SNs are carried in a PDU scheduling channel PDCCH at a MAC layer.

The apparatus in this embodiment may be used to execute the technical solution in the method embodiment shown in FIG. 8, and implementation principles and technical effects of the apparatus are similar and are not described herein.

In the several embodiments provided in the present invention, it should be understood that the disclosed apparatus and method may be implemented in other manners. For example, the described apparatus embodiment is merely exemplary. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected according to actual needs to achieve the objectives of the solutions of the embodiments.

In addition, functional units in the embodiments of the present invention may be integrated into one processing unit, or each of the units may exist alone physically, or two or more units are integrated into one unit. The integrated unit may be implemented in a form of hardware, or may be implemented in a form of hardware in addition to a software functional unit.

When the foregoing integrated unit is implemented in a form of a software functional unit, the integrated unit may be stored in a computer-readable storage medium. The software functional unit is stored in a storage medium and includes several instructions for instructing a computer device (which may be a personal computer, a server, or a network device) or a processor (processor) to perform some of the steps of the methods described in the embodiments of the present invention. The foregoing storage medium includes: any medium that can store program code, such as a USB flash drive, a removable hard disk, a read-only memory (Read-Only Memory, ROM), a random access memory (Random Access Memory, RAM), a magnetic disk, or an optical disc.

It may be clearly understood by persons skilled in the art that, for the purpose of convenient and brief description, division of the foregoing functional modules is taken as an example for illustration. In actual application, the foregoing functions can be allocated to different functional modules and implemented according to a requirement, that is, an inner structure of an apparatus is divided into different functional modules to implement all or some of the functions described above. For a detailed working process of the foregoing apparatus, reference may be made to a corresponding process in the foregoing method embodiments, and details are not described herein again.

Finally, it should be noted that the foregoing embodiments are merely intended for describing the technical solutions of the present invention, but not for limiting the present invention. Although the present invention is described in detail with reference to the foregoing embodiments, persons of ordinary skill in the art should understand that they may still make modifications to the technical solutions described in the foregoing embodiments or make equivalent replacements to some or all technical features thereof, without departing from the scope of the technical solutions of the embodiments of the present invention.

## Claims

1. A data transmission and feedback processing apparatus, comprising:
a first receiving module, configured to receive a data packet sent by a second device, wherein the data packet carries a first sequence number SN;
an identification module, configured to identify an exception according to scheduling information corresponding to the received data packet and the first SN carried in the data packet; and
a feedback module, configured to determine the exception and send a feedback message to the second device, wherein the feedback message carries a second SN, so that the second device retransmits a data packet to the first device according to the second SN, and the second SN is an SN corresponding to the data packet that is corresponding to the exception.

2. The apparatus according to claim 1, further comprising:
a second receiving module, configured to: before the first receiving module receives the data packet sent by the second device, receive the data packet sent by the second device, wherein the data packet carries the first SN; and
a decoding module, configured to decode the data packet and send a feedback identifier to the second device, wherein the feedback identifier comprises a correctness identifier Ack and an error identifier Nack, so that the second device retransmits a data packet corresponding to the Nack in a hybrid automatic repeat HARQ process.

3. The apparatus according to claim 1 or 2, wherein the identification module is specifically configured to:
determine, according to the scheduling information corresponding to the received data packet, that the data packet is a newly transmitted data packet, and that in a buffer of a process corresponding to the data packet, there is a data packet that is not correctly decoded;
or
start a first time window when there is a data packet that is not correctly decoded in a buffer of a first process, and determine, in the first time window and according to the scheduling information corresponding to the received data packet, retransmission of the data packet that is not received and not correctly decoded in the first process;
or
start a second time window when there is a data packet that is not correctly decoded in a buffer corresponding to a second process, and determine, outside the second time window and according to scheduling information corresponding to a first received data packet, that a process of the first data packet is inconsistent with the process of the data packet that is not correctly decoded.

4. The apparatus according to claim 3, wherein the feedback module is specifically configured to:
determine that the exception is that the second device identifies the error identifier Nack as the correctness identifier Ack, and send the feedback message to the second device, wherein the feedback message carries an SN of a data packet corresponding to the Nack data packet.

5. The apparatus according to claim 1 or 2, wherein the identification module is specifically configured to:
determine, according to the first SN carried in the received data packet that is sent by the second device, that the data packet is an inconsecutive data packet;
or
determine, in a receive window and according to the first SN carried in the received data packet that is sent by the second device, that the data packet is an inconsecutive data packet.

6. The apparatus according to claim 5, wherein the feedback module is specifically configured to:
determine that the exception is that the first device does not receive a data packet sent by the second device, and send a feedback message to the second device, wherein the feedback message carries an SN corresponding to the data packet not received or an SN corresponding to a data packet that is received before or after the data packet not received.

7. The apparatus according to any one of claims 1 to 6, further comprising:
a third receiving module, configured to: after the determining module determines the exception and sends the feedback message to the second device, receive a retransmitted data packet sent by the second device, wherein the data packet carries a third SN; and
a sorting module, configured to re-sort the data packet according to the third SN carried in the retransmitted data packet.

8. The apparatus according to any one of claims 1 to 7, wherein the feedback message is carried in a MAC control message.

9. The apparatus according to any one of claims 1 to 8, wherein the first and the third SNs are carried in a PDU at a MAC layer;
or
the first and the third SNs are carried in a PDU scheduling channel PDCCH at a MAC layer.

10. A data transmission and feedback processing apparatus, comprising:
a first sending module, configured to send a data packet to a first device, wherein the data packet carries a first sequence number SN, so that the first device identifies an exception according to the first SN, so that the first device sends a feedback message that carries a second SN to the second device; and
a first receiving module, configured to receive the feedback message sent by the first device, wherein the feedback message carries the second SN, and the second SN is an SN that is carried in a data packet corresponding to the exception.

11. The apparatus according to claim 10, further comprising:
a second sending module, configured to: after the first receiving module receives the feedback message sent by the first device, send a retransmitted data packet to the first device according to the second SN carried in the feedback message, wherein the data packet carries a third SN, so that the first device re-sorts the data packet according to the third SN.

12. The apparatus according to claim 10 or 11, further comprising:
a third sending module, configured to send the data packet to the first device before the first sending module sends the data packet to the first device, wherein the data packet carries the first SN; and
a second receiving module, configured to receive a feedback identifier sent by the second device, wherein the feedback identifier comprises a correctness identifier ACK and an error identifier Nack.

13. The apparatus according to any one of claims 10 to 12, wherein the feedback message is carried in a MAC control message.

14. The apparatus according to any one of claims 10 to 13, wherein the first and the third SNs are carried in a PDU at a MAC layer;
or
the first and the third SNs are carried in a PDU scheduling channel PDCCH at a MAC layer.

15. A data transmission and feedback processing method, comprising:
receiving, by a first device, a data packet sent by a second device, wherein the data packet carries a first sequence number SN;
identifying, by the first device, an exception according to scheduling information corresponding to the received data packet and the first SN carried in the data packet; and
determining, by the first device, the exception and sending a feedback message to the second device, wherein the feedback message carries a second SN, so that the second device retransmits a data packet to the first device according to the second SN, and the second SN is an SN corresponding to the data packet that is corresponding to the exception.

16. The method according to claim 15, before the receiving, by a first device, a data packet sent by a second device, further comprising:
receiving, by the first device, the data packet sent by the second device, wherein the data packet carries the first SN; and
decoding, by the first device, the data packet and sending a feedback identifier to the second device, wherein the feedback identifier comprises a correctness identifier Ack and an error identifier Nack, so that the second device retransmits the data packet in a hybrid automatic repeat HARQ process.

17. The method according to claim 15 or 16, wherein the identifying, by the first device, an exception according to scheduling information corresponding to the received data packet and the first SN carried in the data packet comprises:
determining, by the first device according to the scheduling information corresponding to the received data packet, that the data packet is a newly transmitted data packet, and that in a buffer of a process corresponding to the data packet, there is a data packet that is not correctly decoded;
or
starting, by the first device, a first time window when there is a data packet that is not correctly decoded in a buffer of a first process, and determining, in the first time window and according to the scheduling information corresponding to the received data packet, retransmission of the data packet that is not received and not correctly decoded in the first process;
or
starting, by the first device, a second time window when there is a data packet that is not correctly decoded in a buffer corresponding to a second process, and determining, outside the second time window and according to scheduling information corresponding to a first received data packet, that a process of the first data packet is inconsistent with a process of the data packet that is not correctly decoded.

18. The method according to claim 17, wherein the determining, by the first device, the exception and sending a feedback message to the second device comprises:
determining, by the first device, that the exception is that the second device identifies the error identifier Nack as the correctness identifier Ack, and sending a feedback message to the second device, wherein the feedback message carries an SN of a data packet corresponding to the Nack.

19. The method according to claim 15 or 16, wherein the identifying, by the first device, an exception according to scheduling information corresponding to the received data packet and the first SN carried in the data packet comprises:
determining, according to the first SN carried in the received data packet that is sent by the second device, that the data packet is an inconsecutive data packet;
or
determining, in a receive window and according to the first SN carried in the received data packet that is sent by the second device, that the data packet is an inconsecutive data packet.

20. The method according to claim 19, wherein the determining, by the first device, the exception and sending a feedback message to the second device comprises:
determining, by the first device, that the exception is that the first device does not receive a data packet sent by the second device, and sending a feedback message to the second device, wherein the feedback message carries an SN corresponding to the data packet not received or an SN corresponding to a data packet that is received before or after the data packet not received.

21. The method according to any one of claims 15 to 20, after the determining, by the first device, the exception and sending a feedback message to the second device, further comprising:
receiving, by the first device, a retransmitted data packet sent by the second device, wherein the data packet carries a third SN; and
re-sorting, by the first device, the data packet according to the third SN carried in the retransmitted data packet.

22. The method according to any one of claims 15 to 21, wherein the feedback message is carried in a MAC control message.

23. The method according to any one of claims 15 to 22, wherein the sequence numbers SNs are carried in a PDU at a MAC layer;
or
the SNs are carried in a PDU scheduling channel PDCCH at a MAC layer.

24. A data transmission and feedback processing method, comprising:
sending, by a second device, a data packet to a first device, wherein the data packet carries a first sequence number SN, so that the first device identifies an exception according to the first SN, so that the first device sends a feedback message that carries a second SN to the second device; and
receiving, by the second device, the feedback message sent by the first device, wherein the feedback message carries the second SN.

25. The method according to claim 24, after the receiving, by the second device, the feedback message sent by the first device, further comprising:
sending, by the second device, a retransmitted data packet to the first device according to the second SN carried in the feedback message, wherein the data packet carries a third SN, so that the first device re-sorts the data packet according to the third SN.

26. The method according to claim 24 or 25, before the sending, by a second device, a data packet to a first device, further comprising:
sending, by the second device, the data packet to the first device, wherein the data packet carries the first SN; and
receiving, by the second device, a feedback identifier sent by the second device, wherein the feedback identifier comprises a correctness identifier ACK and an error identifier Nack.

27. The method according to any one of claims 24 to 26, wherein the feedback message is carried in a MAC control message.

28. The method according to any one of claims 24 to 27, wherein the first and third SNs are carried in a PDU at a MAC layer;
or
the first and the third SNs are carried in a PDU scheduling channel PDCCH at a MAC layer.
